# DEMANDE DE BREVET EUROPEEN

(11) **EP 1 956 144 A1**
(43) Date de publication de la demande: **13.08.2008**
(21) Numéro de dépôt: 08290103.4
(22) Date de dépôt: 04.02.2008
(51) Int. Cl.: E01B 27/02, B61D 7/06, B61D 7/32

(54) **Wagon pour le déchargement de ballast sur une voie ferrée**

(30) Priorité: 07.02.2007 FR 0700874
(71) Demandeur: TSO, 77500 Chelles (FR); SA A.B.R.F. Industries, 44110 Chateaubriant (FR); HYDRO3m, 71300 Montceau les Mines (FR); Rolanfer Materiel ferroviaire, 57970 Yutz (FR)
(72) Inventeur: Perron, Loïc, 77400 Lagny Sur Marne (FR); Delpy, Jean-Marie, 77600 Conches sur Gondoire (FR); Remondeau, Jean-Luc, 75006 Paris (FR); Chopard, Jean-Pierre, 71100 Chalon sur Saone (FR); Henry, Yves, 57130 Vaux (FR)
(74) Mandataire: Boutin, Antoine

(57) **Abrégé**

Un wagon trémie comporte en partie basse un cadre (6) doseur mobile entre une position de transport dans laquelle son plan de délimitation inférieur se trouve au-dessus de la hauteur minimale de consigne et une position de travail dans laquelle il affleure le plancher de la voie et forme une enceinte close autour des portes de déversement. Ledit cadre est muni de moyens (7, 18) lui permettant de venir en appui coulissant sur les rails de la voie en position basse et de moyens assurant un pré nivellement du ballast.

## Description

L'invention concerne le déchargement de ballast sur une voie ferrée. Actuellement, cette opération s'effectue généralement en mettant en oeuvre des trains de wagons trémie équipés de portes permettant un déversement central et/ou un déversement latéral de part et d'autre du wagon. Typiquement un train de ballastage est constitué de 20 wagons ayant une contenance unitaire de l'ordre de 40 à 50 m3 de ballast. Un train de ballast est tracté par plusieurs motrices de forte puissance (de l'ordre de 2000 CV chacune) qui doivent assurer la traction de cette rame sur le chantier de ballastage à faible vitesse de l'ordre de 4 à 5 km/h. Sur le chantier, l'opération de ballastage requiert un personnel nombreux, soit deux opérateurs par wagon (un pour chaque partie latérale du wagon) complétés par un ou plusieurs opérateurs qui, marchant le long de la voie, surveillent le déchargement du ballast et signalent tout incident éventuel, les autres, se tenant sur la plate-forme du wagon, prêts à manoeuvrer les commandes des portes en fonction des ordres qu'il reçoivent de leurs équipiers marchant le long de la voie. D'autre part, les ouvertures des portes de déversement des wagons se trouvent habituellement à une hauteur d'environ 700 mm au-dessus du plancher de la voie.

Les principaux inconvénients constatés lors des opérations de ballastage avec les matériels connus sont les suivants :
- impossibilité de déverser, simultanément le ballast entre les rails et sur les cotés de la voie par les ouvertures de déversement dont le positionnement doit être prédisposé,
- bruit et poussière importants du fait de la grande hauteur de chute,
- imprécision de la dépose et nécessité de procéder à des opérations de reprise et de nivellement complémentaires,
- risque d'accumulation de ballast sur les rails de la voie en travaux entraînant un risque de déraillement sur cette voie et de projection de ballast sur la voie adjacente, entraînant un risque pour les trains circulant sur ces voies ou pour le personnel travaillant à proximité.

La présente invention vise à remédier à ces inconvénients en procurant un wagon trémie équipé de moyens permettant de déverser simultanément le ballast sur toute la largeur de l'assise de la voie, en réduisant considérablement les bruits et les émissions de poussières, en assurant une dépose homogène et précise du ballast et en éliminant tout risque de projection ou d'accumulation intempestive du ballast hors de la zone de travail, même en cas d'arrêt intempestif de la traction du train de déchargement.

Selon l'invention, le wagon trémie, qui comporte en partie basse un cadre doseur mobile entre une position de transport dans laquelle son plan de délimitation inférieur se trouve au-dessus de la hauteur minimale de consigne et une position de travail dans laquelle il affleure le plancher de la voie et forme une enceinte close autour des portes de déversement, ledit cadre étant muni de moyens lui permettant de venir en appui coulissant sur les rails de la voie en position basse et de moyens assurant un pré nivellement du ballast, est caractérisé en ce que ledit cadre doseur est équipé de moyens de verrouillage hydraulique et de verrouillage mécanique par rapport au châssis du wagon.

Grâce à ces dispositions, on confine le déversement du ballast à la zone précise sur laquelle son épandage est désiré, on limite considérablement sa hauteur de chute et par conséquent les nuisances sonores, on évite le dégagement de poussières et la projection de ballast sur les voies adjacentes, on limite le déversement du surplus de ballast lors des arrêts du train de travaux, on supprime les opérations de reprise après le passage du train de travaux, et l'on assure grâce aux moyens de verrouillage mécanique un verrouillage permanent du cadre au châssis pendant le transport tandis que grâce aux moyens de verrouillage hydraulique on peut obtenir un maintien momentané du cadre en position relevée en cas de besoin au cours des phases de travail.

Selon un mode de réalisation préféré, le cadre doseur est constitué par deux longerons dont le bord inférieur est rectiligne et deux travées d'extrémité dont le bord inférieur reproduit le profil du ballast à obtenir.

Selon d'autres caractéristiques préférées :
- le cadre doseur est équipé de deux protecteurs de rails,
- les protecteurs de rails sont munis de patins de glissement ou de rouleaux,
- les protecteurs de rails sont d'une largeur telle qu'ils recouvrent les attaches rails / traverses,
- les protecteurs de rails sont d'une largeur telle qu'ils permettent un passage dans les courbes d'un rayon minimal de 50 mètres,
- le cadre doseur comporte entre les protecteurs de rails au moins un dôme destiné à limiter le flux de ballast,
- le cadre doseur est monté sur le châssis du wagon par des vérins hydrauliques,
- le cadre doseur est équipé de moyens de verrouillage hydraulique et de moyens de verrouillage mécanique par rapport au châssis du wagon,
- le bas de trémie du wagon est équipé de quatre rangées de trappes longitudinales articulées à commandes individuelles hydrauliques,
- les mouvements des trappes et du cadre doseur sont radiocommandés.

D'autres caractéristiques et avantages de l'invention ressortiront de la description qui va suivre d'un exemple de réalisation non limitatif d'un wagon trémie conforme à l'invention en relation avec les dessins annexés dans lesquels :
- la figure 1 est une vue de coté d'un wagon trémie selon l'invention en position de transport,
- la figure 2 est une vue de coté d'un wagon trémie selon l'invention en position de travail,
- la figure 3 est une vue en coupe schématique de l'agencement du bas de trémie du wagon représenté sur les figures précédentes,
- la figure 4 est une vue de dessus du cadre doseur,
- la figure 5 est une vue en bout du cadre doseur,
- la figure 6 est une vue en coupe selon la ligne A-A de la figure 1,
- la figure 7 est une vue en coupe selon la ligne B-B de la figure 1,
- la figure 8 est une vue en coupe selon la ligne A-A de la figure 2,
- les figures 9a à 9f illustrent les phases de fonctionnement du wagon trémie selon l'invention.

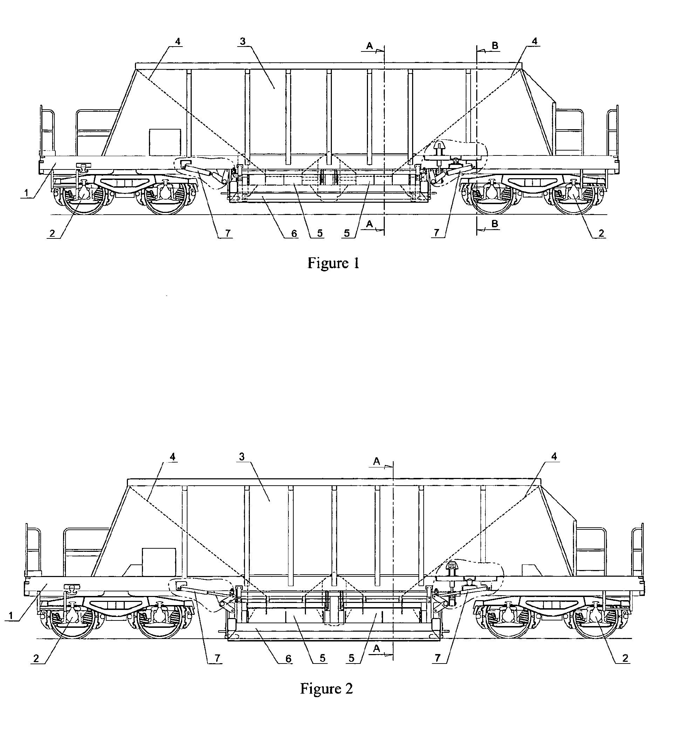

Le wagon trémie représenté sur les figures 1 et 2 comporte de manière connue en soi un châssis 1 porté par deux bogies 2 et sur lequel est fixée une trémie 3 ouverte à sa partie supérieure. A l'intérieur de la trémie sont agencés deux plans inclinés convergents 4 en direction des trappes de déchargement 5 disposées sous le châssis entre les bogies. Un cadre doseur 6 est monté mobile par rapport au châssis par des vérins hydrauliques 7 dont la manoeuvre permet d'abaisser et de relever le cadre doseur entre ses positions de transport et de travail.

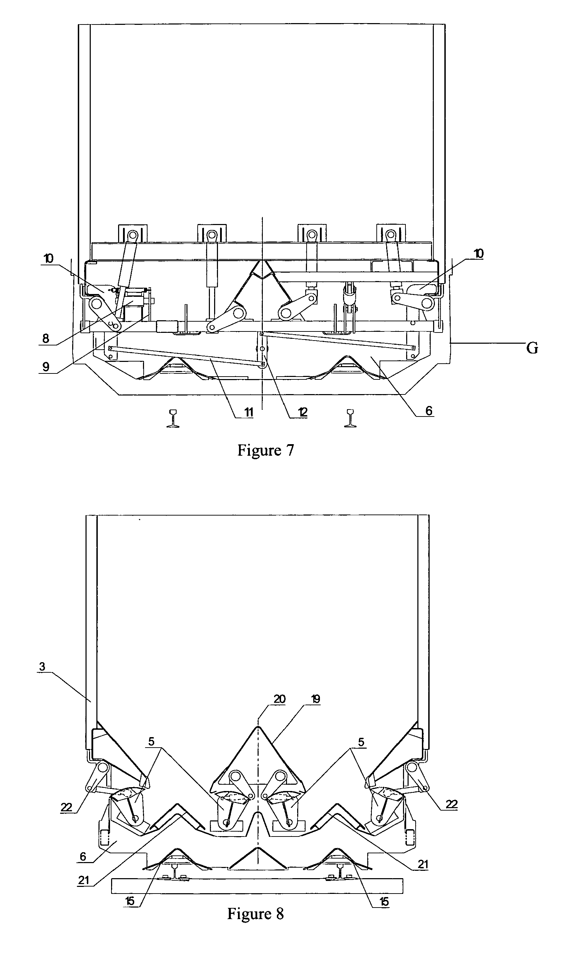

On voit plus en détail sur la figure 7 les moyens de verrouillage hydraulique et de verrouillage mécanique du cadre doseur 6 en position de transport. Ces moyens de verrouillage hydraulique sont constitués par les pistons 8 portés par le châssis du wagon et dont l'extrémité libre de la tige peut être engagée dans ou dégagée d'une gâche 9 portée par une travée d'extrémité du cadre doseur. Les moyens de verrouillage mécanique sont constitués par deux tiges 10 en L dont le nez est apte à coopérer avec un épaulement d'un longeron du châssis du wagon et dont la queue, articulée sur une travée d'extrémité du cadre doseur, est reliée par des biellettes 11 à une tringle de commande 12. Le verrouillage hydraulique permet d'assurer rapidement le cadre en position haute en cas de nécessité lors des manoeuvres sur le chantier de déchargement, tandis que le verrouillage mécanique est destiné au maintien permanent du cadre doseur en position haute pendant le transport. On voit sur la figure 7 que cette position haute est située au-dessus du gabarit bas ferroviaire symbolisé par la ligne G.

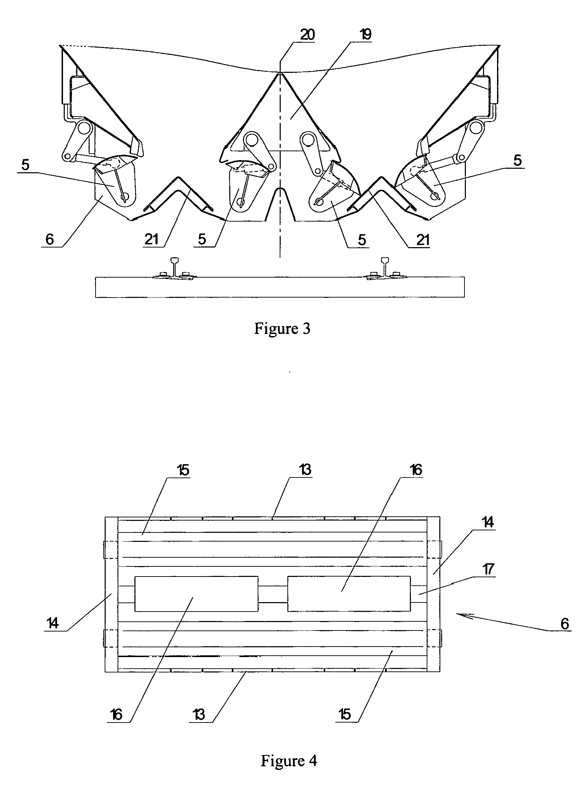

Sur la vue de dessus de la figure 4, on voit que le cadre doseur 6 est essentiellement constitué par deux longerons 13 assemblés à leurs extrémités par deux travées 14. Il forme une enceinte entourant les trappes de déchargement 5 au bas de la trémie 3. Les travées 14 portent deux protecteurs de rails 15, en forme des jupes évasées, de manière à recouvrir les rails et leurs systèmes d'attache pour éviter d'y déposer du ballast lors des opérations de déchargement. Entre les deux protecteurs de rails 15, les travées 14 portent en outre au moins un, et dans cet exemple de réalisation deux, dômes 16 fixés sur une poutre 17 et dont la fonction est, en combinaison avec les protecteurs de rail 15, d'assurer le dosage de la quantité de ballast déposée sur la voie lors des opérations de déchargement.

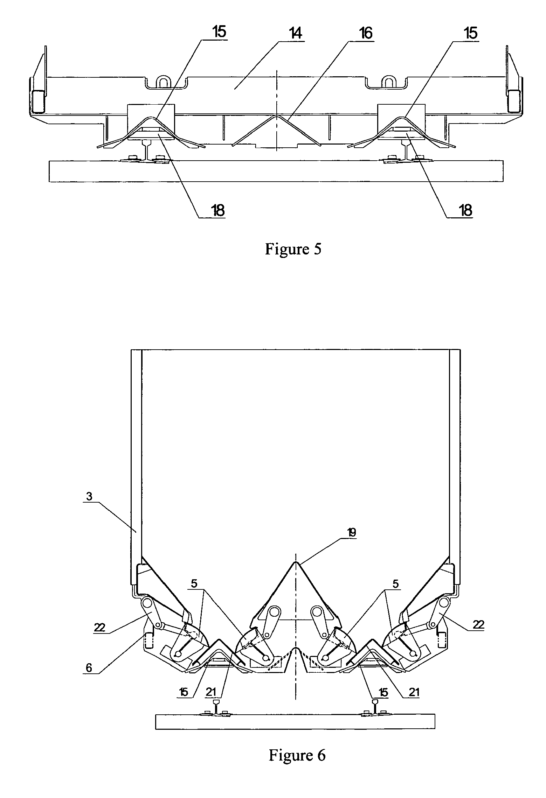

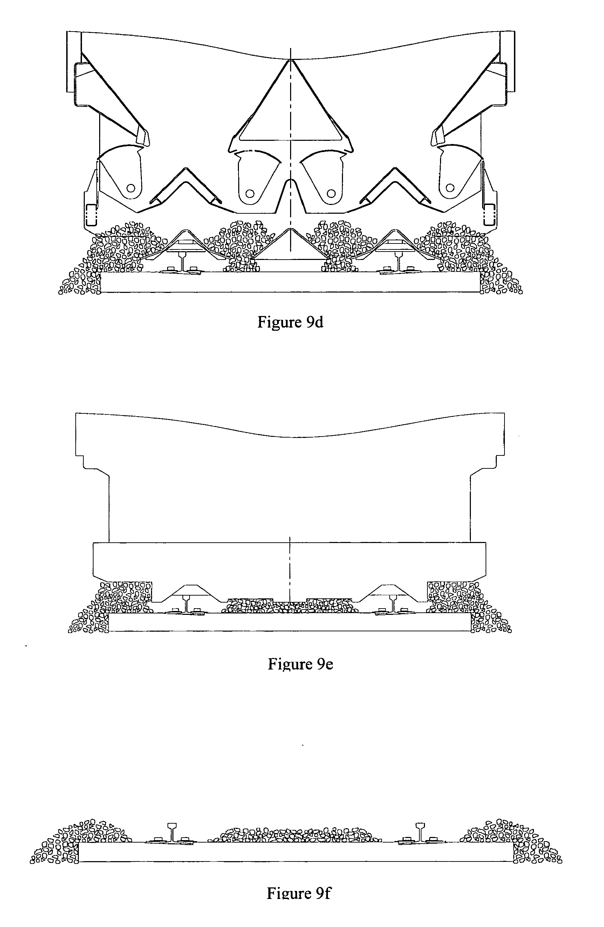

Sur la vue en bout de la figure 5, on voit que les protecteurs de rails 15 sont équipés de patins de glissement 18 qui sont destinés à venir en contact avec les champignons des rails lorsque le cadre doseur est abaissé en position de travail et permettent un guidage du cadre le long des rails sans risque d'endommagement de ces derniers. En variante les patins 18 peuvent être remplacés par des galets, des rouleaux ou tout autre dispositif apte à faciliter le glissement du cadre sur les rails. Les protecteurs de rails sont d'une largeur telle qu'ils permettent un passage dans les courbes d'un rayon minimal de 50 mètres. On voit également sur cette figure 5 que la forme inférieure des travées 14 reproduit le profil désiré du ballast sur la voie après le déchargement et remplit ainsi une fonction de pré nivellement qui supprime les opérations de reprises nécessaires avec les wagons trémie de l'art antérieur. Plus précisément, les cotés de la partie inférieure des travées forment des échancrures par rapport à la partie centrale, en raison du fait que le ballast doit être déposé sur les cotés de la voie selon un épaisseur plus grande qu'entre les rails (voir les figures 9d à 9f).

Sur la vue schématique de la figure 3, on voit que le bas de la trémie 3 est équipé de quatre trappes 5 disposées de part et d'autre d'un dôme répartiteur 19 disposé selon l'axe longitudinal médian 20 du wagon. Sous les ouvertures définies par les bords de la trémie et ceux du dôme répartiteur 19, à l'aplomb des protecteurs de rails 15 portés par le cadre doseur 6, le châssis du wagon comporte deux dômes 21 qui définissent les quatre passages commandés par les trappes 5, à savoir deux passages latéraux et deux passages centraux. Les trappes 5 sont articulées et commandées individuellement par les vérins hydrauliques 22 visibles sur les figures 6 et 8. Cet agencement permet un déchargement contrôlé du ballast sur le coté des rails et/ou simultanément ou séparément entre les rails, selon toute combinaison adaptée aux travaux à réaliser.

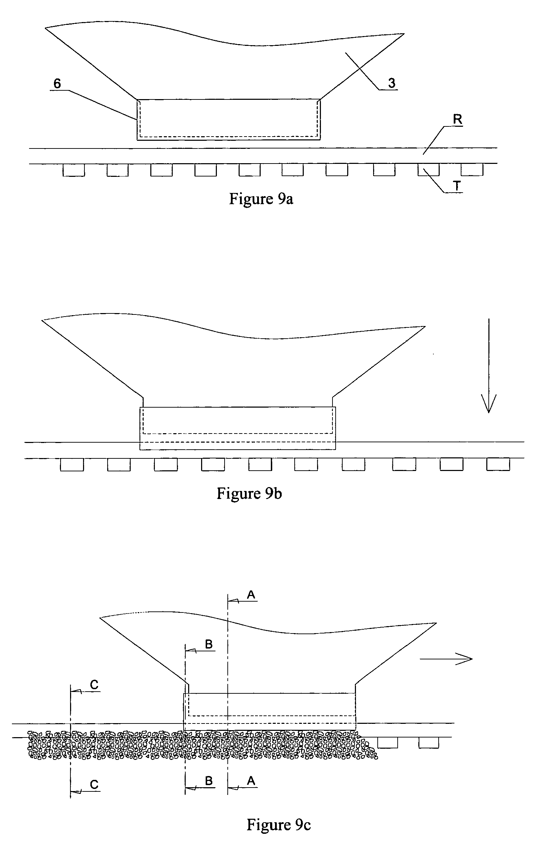

Les figures 9a à 9f illustrent schématiquement le déroulement d'un chantier de déchargement de ballast au moyen d'un train constitué de wagons trémie selon l'invention. Sur la figure 9a le wagon est positionné sur la portion de voie à traiter, qui a été préalablement dégarnie. Les rails R et les traverses T sont vides de ballast. Après déverrouillage des dispositifs hydrauliques et mécaniques de verrouillage du cadre doseur 6, celui-ci est abaissé par gravité contrôlée à l'aide des vérins 7 (figure 9b) jusqu'à venir reposer sur les rails de la voie par les patins 18 des protecteurs de rail 15. Les trappes 5 sont ouvertes et le ballast se décharge par gravité à l'intérieur du cadre doseur 6 (figures 9c et 9d), tandis que l'avancement simultané du wagon assure un pré nivellement du ballast déchargé par la configuration spéciale des travées du cadre doseur 6 (figure 9e). Après le passage du wagon, le ballast a été régulièrement réparti entre les rails et sur les cotés de ceux-ci, sans se répandre sur les rails et leur attaches (figure 9f).

La quantité de ballast déchargée est automatiquement régulée par le cadre doseur, même dans le cas d'arrêt intempestif du train.

Selon un mode de réalisation préférentiel de l'invention, les trappes sont radiocommandées. Il est alors possible de diminuer considérablement le nombre d'opérateurs nécessaires à l'opération de déchargement. En effet, par la conjonction de l'absence de dégagement de poussières et de l'autorégulation résultant de l'emploi du cadre doseur combinés à la commande hydraulique individuelle des trappes, un seul opérateur marchant de chaque coté du train le long de la voie suffit à exercer un contrôle visuel efficace du déchargement du ballast et à commander instantanément la fermeture des trappes situées de son coté en cas de besoin.

## Revendications

1. Wagon trémie du type qui comporte en partie basse un cadre doseur mobile entre une position de transport dans laquelle son plan de délimitation inférieur se trouve au-dessus de la hauteur minimale de consigne et une position de travail dans laquelle il affleure le plancher de la voie et forme une enceinte close autour des portes de déversement, ledit cadre étant muni de moyens lui permettant de venir en appui coulissant sur les rails de la voie en position basse et de moyens assurant un pré nivellement du ballast, **caractérisé en ce que** ledit cadre doseur (6) est équipé de moyens de verrouillage hydraulique (8, 9) et de moyens de verrouillage mécanique (10, 11) par rapport au châssis du wagon.

2. Wagon trémie selon la revendication 1 dans lequel le cadre doseur est constitué par deux longerons dont le bord inférieur est rectiligne et deux travées d'extrémité dont le bord inférieur reproduit le profil du ballast à obtenir, et est équipé de deux protecteurs de rails **caractérisé en ce que** les protecteurs (15) de rails sont d'une largeur telle qu'ils recouvrent les attaches rails / traverses.

3. Wagon trémie selon la revendications 2 **caractérisé en ce que** les protecteurs (15) de rails sont d'une largeur telle qu'ils permettent un passage dans les courbes d'un rayon minimal de 50 mètres.

4. Wagon trémie selon l'une quelconque des revendications 2 ou 3 **caractérisé en ce que** le cadre doseur (6) comporte entre les protecteurs (15) de rails au moins un dôme (16) destiné à limiter le flux de ballast.

5. Wagon trémie selon l'une quelconque des revendications 1 à 4 **caractérisé en ce que** le bas de trémie du wagon est équipé de quatre rangées de trappes longitudinales (5) articulées à commandes individuelles hydrauliques (22).

6. Wagon trémie selon l'une quelconque des revendications 1 à 8 **caractérisé en ce que** les mouvements des trappes (5) et du cadre doseur (6) sont radiocommandés.
